# EUROPÄISCHE PATENTSCHRIFT

(11) **EP 3 999 387 B1**
(45) Veröffentlichungstag und Bekanntmachung des Hinweises auf die Patenterteilung: **13.03.2024**
(21) Anmeldenummer: 20739987.4
(22) Anmeldetag: 13.07.2020
(51) Int. Cl.: B60S 1/40

(54) **BLATTANBINDUNG MIT SCHIEBER**
BLADE LINKAGE HAVING SLIDER
ASSEMBLAGE DE BALAI À L'AIDE D'UN COULISSEAU

(30) Priorität: 19.07.2019 DE 102019210722
(43) Veröffentlichungstag der Anmeldung: 25.05.2022
(73) Patentinhaber: Robert Bosch GmbH, 70442 Stuttgart (DE)
(72) Erfinder: LIND, Eugen, 77871 Renchen-Erlach (DE)
(86) Internationale Anmeldenummer: PCT/EP2020/069724
(87) Internationale Veröffentlichungsnummer: WO 2021/013602

(56) Entgegenhaltungen:
- DE-A1-102013 019 805
- DE-A1-102015 011 370
- US-A1- 2014 317 875
- US-A1- 2015 251 635

## Beschreibung

### Stand der Technik

In der Druckschrift DE 10 2010 052 315 A1 ist bereits eine Scheibenwischervorrichtung mit zumindest einem Wischblattadapter zu einer Befestigung einer Wischleiste, welcher zumindest ein Wischblattadapterelement aufweist, mit einem Wischarm, welcher zumindest einen Wischarmadapter aufweist, der zu einer direkten, lösbaren Kopplung mit dem Wischblattadapterelement vorgesehen ist, und mit einer Verriegelungseinheit, die in einer Sicherungsposition dazu vorgesehen ist, den zumindest einen Wischblattadapter in einem montierten Zustand an dem zumindest einen Wischarmadapter zu sichern, und die dazu vorgesehen ist, zumindest im Wesentlichen parallel zu einer Haupterstreckungsrichtung des Wischarms von einer Sicherungsposition in eine Entsicherungsposition und/oder von einer Entsicherungsposition in eine Sicherungsposition der Verriegelungseinheit bewegt zu werden, vorgeschlagen worden.

US-A-2015/0251635 offenbart den Oberbegriff des Anspruchs 1.

### Offenbarung der Erfindung

Die Erfindung geht aus von einer Scheibenwischervorrichtung mit zumindest einem Wischblattadapter zu einer Befestigung einer Wischleiste, welcher zumindest ein Wischblattadapterelement aufweist, mit einem Wischarm, welcher zumindest einen Wischarmadapter aufweist, der zu einer direkten, lösbaren Kopplung mit dem Wischblattadapterelement vorgesehen ist, und mit einer Verriegelungseinheit, die in einer Sicherungsposition dazu vorgesehen ist, den zumindest einen Wischblattadapter in einem montierten Zustand an dem zumindest einen Wischarmadapter zu sichern, und die dazu vorgesehen ist, zumindest im Wesentlichen parallel zu einer Haupterstreckungsrichtung des Wischarms von der Sicherungsposition in eine Entsicherungsposition und/oder von einer Entsicherungsposition in eine Sicherungsposition der Verriegelungseinheit bewegt zu werden.

Es wird vorgeschlagen, dass die Verriegelungseinheit zumindest ein Sicherungselement aufweist, welches in Längsrichtung zweiseitig beschränkt an dem Wischblattadapter, insbesondere dem Wischblattadapterelement, geführt ist.

Hierdurch kann eine besonders vorteilhaft hohe Betriebssicherheit und/oder einfache Montierbarkeit der Scheibenwischervorrichtung erreicht werden. Des Weiteren kann hierdurch eine besonders vorteilhaft zuverlässige und/oder wartungsarme Scheibenwischervorrichtung bereitgestellt werden. Es kann insbesondere erreicht werden, dass das Sicherungselement mit dem Wischblattadapter, insbesondere dem Wischblattadapterelement, insbesondere unverlierbar, verbunden ist.

Des Weiteren soll hier unter "im Wesentlichen parallel" insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Haupterstreckungsrichtung" eines Objekts soll hierbei insbesondere eine Richtung verstanden werden, welche parallel zu einer längsten Kante eines kleinsten geometrischen Quaders verläuft, welcher das Objekt gerade noch vollständig umschließt. Insbesondere ist die Sicherungsposition der Verriegelungseinheit dazu vorgesehen, den Wischarm gegen eine Bewegung zumindest im Wesentlichen quer zu einer Haupterstreckungsrichtung des Wischblatts zu sichern. Unter "quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist.

Vorzugsweise verläuft die Längsrichtung des Wischblattadapters, insbesondere in einem montierten Zustand, zumindest im Wesentlichen parallel zu der Haupterstreckungsrichtung des Wischblatts. Insbesondere weist die zweiseitige Beschränkung des Sicherungselements in der Längsrichtung des Wischblattadapters zumindest eine kraftschlüssige und/oder formschlüssige Beschränkung auf. Unter einer "formschlüssigen Beschränkung" soll insbesondere verstanden werden, dass aneinanderliegende Flächen von miteinander formschlüssig beschränkten Bauteilen eine in Normalenrichtung der Flächen wirkende Haltekraft aufeinander ausüben. Vorzugsweise ist die formschlüssige Beschränkung als eine Erhebung und/oder als eine Vertiefung ausgebildet. Bevorzugt weist die formschlüssige Beschränkung zumindest einen Anschlag oder ein Blockierelement auf. Die formschlüssige Beschränkung kann insbesondere eine beidseitig abgesetzte Langlochnut aufweisen. Insbesondere befinden sich die Bauteile in einem geometrischen Eingriff miteinander. Unter einer "kraftschlüssigen Beschränkung" soll insbesondere verstanden werden, dass aneinander liegende Flächen von miteinander kraftschlüssig beschränkten Bauteilen eine reibungsbedingte Haltekraft aufeinander ausüben und/oder dass die miteinander kraftschlüssig beschränkten Bauteile mittels einer Rückstellkraft beschränkt voneinander wegbewegbar und/oder aufeinander zubewegbar ausgebildet sind. Vorzugsweise ist die kraftschlüssige Beschränkung als ein Federelement ausgebildet. Unter einem "Federelement" soll insbesondere ein makroskopisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 0,5 mm, insbesondere von wenigstens 1 mm und vorzugsweise von maximal 10 mm verstanden werden.

Vorzugsweise ist die Verriegelungseinheit dazu vorgesehen, den Wischarm an dem Wischblattadapter zu sichern. Bevorzugt ist die Sicherung des Wischarms an dem Wischblattadapter dazu vorgesehen, ein Abheben und/oder Freigeben des Wischarms in einer Richtung quer zu der Längsrichtung zu verhindern. Insbesondere besteht die Verriegelungseinheit zumindest teilweise aus dem Sicherungselement, wobei das Sicherungselement insbesondere einteilig ausgebildet ist. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Vorteilhaft soll unter einteilig auch einstückig verstanden werden. Des Weiteren ist die Verriegelungseinheit bevorzugt wenigstens zu einem Großteil von einem Kunststoffmaterial ausgebildet. Besonders bevorzugt ist die Verriegelungseinheit, insbesondere gemeinsam mit dem Wischblatt und/oder dem Wischblattadapter austauschbar ausgebildet. Des Weiteren weist die Verriegelungseinheit vorzugsweise ein Rückstellelement auf. Das Rückstellelement ist bevorzugt als ein Federelement ausgebildet. Das Rückstellelement ist insbesondere dazu vorgesehen, vorzugsweise in einer Gleichgewichtslage das Verriegelungselement in der Sicherungsposition zu halten.

Nach der Erfindung wird vorgeschlagen, dass das Sicherungselement und/oder das Wischblattadapterelement zumindest eine geschlossene Längsführungsnut zu einer Führung des Sicherungselements an dem Wischblattadapter aufweist. Hierduch kann eine vorteilhaft sichere Führung zu einer vorteilhaft hohen Betriebssicherheit der Scheibenwischervorrichtung bereitgestellt werden. Insbesondere erstreckt sich die Längsführungsnut zumindest im Wesentlichen parallel zu der Längsrichtung des Wischblattadapters. Vorzugsweise begrenzt die Längsführungsnut eine Ausnehmung, welche zu einer Seite geöffnet ist. Die Längsführungsnut kann dabei sowohl direkt in eine Seitenwand des Sicherungselements und/oder des Wischblattadapters oder mittels einer Erhebung auf eine Seitenwand des Sicherungselements und/oder des Wischblattadapters aufgesetzt sein. Bevorzugt weist die, durch die Längsführungsnut begrenzte Ausnehmung, in einer Ebene senkrecht zu einer Haupterstreckungsrichtung der Längsführungsnut einen profilierten Querschnitt auf. Insbesondere weist der profilierte Querschnitt der Ausnehmung einen durch das Sicherungselement und/oder das Wischblattadapterelement unvollständig umschlossenen äußeren Umfangsbereich auf. Besonders bevorzugt ist der profilierte Querschnitt als rechteckiger oder T-förmiger oder C-förmiger oder Omega-förmiger oder L-förmiger oder dreieckiger Querschnitt oder polygonaler Querschnitt oder von einer Querschnittskombination ausgbildet. Insbesondere ist die Längsführungsnut an zumindest einer Stirnseite geschlossen ausgebildet. Vorzugsweise weist die Längsführungsnut an zumindset einer Stirnseite die kraftschlüssige und/oder formschlüssige Beschränkung auf. Bevorzugt ist die Längsführungsnut an zwei Stirnseiten geschlossen ausgebildet.

Ferner wird vorgeschlagen, dass das Sicherungselement und/oder das Wischblattadapterelement zumindest einen Führungsfortsatz aufweist, welcher zu einem Eingriff in die zumindest eine Längsführungsnut vorgesehen ist. Hierdurch kann eine vorteilhaft hohe Führungsqualität zu einer vorteilhaft sicheren Befestigung der Bauteile der Scheibenwischervorrichtung bereitgestellt werden. Des Weiteren kann hierdurch eine vorteilhaft sichere Führung zu einer vorteilhaft hohen Betriebssicherheit der Scheibenwischervorrichtung bereitgestellt werden. Bevorzugt weist der Führungsfortsatz in einer Ebene senkrecht zu einer Haupterstreckungsrichtung des Führungsfortsatzes einen profilierten Querschnitt auf. Vorzugsweise ist der profilierte Querschnitt des Führungsfortsatzes als ein materieller Querschnitt, insbesondere eine materielle Geometrie, ausgebildet. Bevorzugt ist der profilierte Querschnitt als U-förmiger oder T-förmiger oder kreisförmiger oder C-förmiger oder omegaförmiger oder L-förmiger oder V-förmiger Querschnitt oder polygonaler Querschnitt oder von einer Querschnittskombination ausgebildet. Bevorzugt sind der Querschnitt der Längsführungsnut und der Querschnitt des Führungsfortsatzes korrelierend zueinander ausgebildet. Insbesondere umfasst eine innere Umfangsfläche der Längsführungsnut betrachtet bei einer koaxialen Ausrichtung der Haupterstreckungsrichtung der Längsführungsnut und der Haupterstreckungsrichtung des Führungsfortsatzes eine äußere Umfangsfläche des Führungsfortsatzes wenigstens zu einem Großteil. Unter dem Ausdruck "zu wenigstens einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden. Insbesondere ist der Führungsfortsatz als ein Fortsatz mit dem profilierten Querschnitt auf dem Sicherungselement und/oder dem Wischblattadapterelement ausgebildet. Bevorzugt ist der Führungsfortsatz einteilig mit dem Sicherungselement und/oder dem Wischblattadapterelement ausgebildet. Des Weiteren ist der Führungsfortsatz vorzugsweise dazu vorgesehen, in die Längsführungsnut einzugreifen. Bevorzugt ist der Führungsfortsatz dazu vorgesehen, in der Längsführungsnut aufgenommen zu werden. Ferner sind die profilierten Querschnitte bevorzugt geometrisch identisch zueinander ausgebildet. Besonders bevorzugt sind die identisch zueinander ausgebildeten profilierten Querschnitte in einer Ausdehnung senkrecht zu einer der Haupterstreckungsebenen betrachtet vergrößert und/oder verkleinert zueinander ausgebildet.

Es wird des Weiteren vorgeschlagen, dass das Sicherungselement unverlierbar mit dem Wischblattadapterelement verbunden ist. Hierdurch kann eine vorteilhaft hohe Zuverlässigkeit der Scheibenwischervorrichtung erreicht werden. Des Weiteren kann hierdurch eine vorteilhaft hohe Betriebssicherheit und/oder eine Montierbarkeit bereitgestellt werden. Es kann insbesondere ein Austausch des Sicherungselements mit dem Wischblatt gewährleistet werden. Hierdurch kann, insbesondere durch ständiges Erneuern, eine Materialermüdung des Sicherungselements vermieden werden. Insbesondere weist das Sicherungselement eine formschlüssige Verbindung mit dem Wischblattadapterelement auf. Vorzugsweise ist die formschlüssige Verbindung dazu vorgesehen, eine Relativbewegung entlang einer ersten Raumrichtung zwischen dem Sicherungselement und dem Wischblattadapterelement innerhalb eines beschränkten Bewegungsbereichs zuzulassen. Bevorzugt ist die erste Raumrichtung zumindest im Wesentlichen parallel zu einer der Haupterstreckungsrichtungen der Längsführungsnut und/oder des Führungsfortsatzes. Bevorzugt ist die formschlüssige Verbindung dazu vorgesehen, eine weitere Relativbewegung des Sicherungselements in alle weiteren von der ersten Raumrichtung differierenden Raumrichtungen zu beschränken. Vorzugsweise ist die weitere Relativbewegung auf ein Lagerspiel und/oder Bauteiltoleranzen und/oder eine elastische Dehnung und/oder eine thermische Ausdehnung beschränkt. Des Weiteren ist insbesondere die formschlüssige Verbindung dazu vorgesehen, vorzugsweise eine ungewollte Trennung des Sicherungselements und des Wischblattadapterelements voneinander zu verhindern.

Ferner wird vorgeschlagen, dass das zumindest eine Wischblattadapterelement einen Kopplungsbereich aufweist, welcher in einem montierten Zustand zumindest im Wesentlichen von dem Wischarmadapter umgriffen ist, wobei der Kopplungsbereich in einer Montageposition der Verriegelungseinheit, insbesondere in einer Richtung senkrecht zu der Längsrichtung des Wischblattadapters, zumindest im Wesentlichen frei von einer Überdeckung durch das Sicherungselement ist. Hierdurch kann eine vorteilhaft bedienerfreundliche und/oder effiziente Montierbarkeit der Scheibenwischervorrichtung erreicht werden. Es kann insbesondere eine Montage des Wischarmadapters aus einer Richtung senkrecht zu der Längsrichtung des Wischblattadapters erreicht werden. Vorzugsweise ist der Kopplungsbereich in einem montierten Zustand wenigstens zu einem Großteil von dem Wischarmadapter umgriffen. Vorzugsweise ist der Kopplungsbereich in einem durch die Verriegelungseinheit gesicherten Zustand des Wischarmadapters wenigstens zu einem Großteil von dem Sicherungselement umgriffen. Insbesondere umgreift die Verriegelungseinheit in einem durch die Verriegelungseinheit gesicherten Zustand des Wischarmadapters wenigstens zu einem Großteil das Wischarmadapterelement. Vorzugsweise soll unter einer Längsrichtung des Wischblattadapterelements auch die Längsrichtung des Wischblattadapters verstanden werden. Insbesondere ist ein äußerer Umfang des einen Wischblattadapterelements in einem montierten Zustand, vorzugsweise betrachtet in einer Ebene senkrecht zu der Längsrichtung des einen Wischblattadapterelements, wenigstens zu einem Großteil von einem inneren Umfang des Wischarmadapters umgeben. Des Weiteren ist insbesondere der äußere Umfang des Wischarmadapters, vorzugsweise betrachtet in einer Ebene senkrecht zu der Längsrichtung des Wischblattadapters wenigstens zu einem Großteil frei von einer Überdeckung durch einen inneren Umfang des Sicherungselements. Vorzugsweise weist das Sicherungselement in der Montageposition relativ zu dem einen Wischarmadapterelement entlang der Längsrichtung eine maximale, vorzugsweise von einer Beschränkung der zweiseitigen Beschränkung beschränkte, Beabstandung auf. Ferner ist der Wischarmadapter, insbesondere in einem demontierten Zustand, vorzugsweise frei von dem Sicherungselement. Der Kopplungsbereich ist bevorzugt dazu vorgesehen, den Wischarm lösbar aufzunehmen. Des Weiteren ist der Koppelbereich bevorzugt dazu vorgesehen, den Wischarm, insbesondere den Wischarmadapter, direkt aufzunehmen. Vorzugsweise ist der Kopplungsbereich des Wischarmadapters dazu vorgesehen, den Wischarm in einer Richtung zumindest im Wesentlichen parallel zu der Haupterstreckungsrichtung des Wischarms zu halten. Besonders bevorzugt ist der Kopplungsbereich in einem montierten Zustand des Wischarms dazu vorgesehen, den Wischarm formschlüssig entgegen einer möglichen Bewegung in der Richtung zumindest im Wesentlichen parallel zu der Haupterstreckungsrichtung des Wischarms zu halten. Vorzugsweise weist der Kopplungsbereich zumindest ein Koppelelement auf. Insbesondere ist das zumindest eine Koppelelement als eine Ausnehmung oder ein Kopplungsfortsatz ausgebildet. Vorzugsweise ist die Ausnehmung als Öse oder als eine Nut oder als eine Tasche ausgebildet. Bevorzugt ist das Koppelelement als ein Steg oder ein Bolzen oder ein Hakenelement oder ein Zungenfortsatz und/oder Rastelement ausgebildet. Besonders bevorzugt weist der Wischarmadapter ein zu dem Koppelelement des Wischblattadapters korrelierendes weiteres Koppelelement auf. Vorzugsweise ist das Koppelelement als Kopplungsfortsatz und das weitere Koppelelement als korrelierende Ausnehmung ausgebildet. Insbesondere ist der Koppelbereich in einem montierten Zustand dazu vorgesehen, eine Relativbewegung des Wischarmadapters und des einen Wischblattadapterelements in der Richtung zumindest im Wesentlichen parallel zu der Haupterstreckungsrichtung des Wischarms zu verhindern. Bevorzugt ist die Relativbewegung des Wischarmadapters und des einen Wischblattadapterelements beschränkt auf ein insbesondere bauteiltoleranzbedingtes und/oder elastizitätsmodulbedingtes und/oder lagerbedingtes und/oder temperaturbedingtes Spiel begrenzt.

Des Weiteren wird vorgeschlagen, dass das Sicherungselement einen manuell betätigbaren Schieber aufweist. Hierdurch kann ein vorteilhaft hoher Bedienkomfort bei einer Montage und/oder Demontage bereitgestellt werden. Ferner kann hierdurch ein vorteilhaft betriebssichere Montagevorgang sichergestellt werden. Vorzugsweise ist der Schieber manuell verschiebbar an dem einen Wischblattadapterelement gelagert. Vorzugsweise ist ein manuell verschiebbares Bauteil durch eine Kraft einer durchschnittlichen menschlichen Hand bewegbar ausgebildet. Insbesondere weist der Schieber einen Griffbereich auf. Der Griffbereich ist vorzugsweise zumindest teilweise als eine Vertiefung auf einer äußeren Oberfläche des Schiebers ausgebildet.

Es wird ferner vorgeschlagen, dass das Sicherungselement dazu vorgesehen ist, den Wischarmadapter und den Wischblattadapter in einer Richtung zumindest im Wesentlichen senkrecht zu einer Wischfläche in einer Funktionsstellung zu verriegeln. Hierdurch kann eine vorteilhaft sichere Befestigung der Scheibenwischervorrichtung erreicht werden. Vorzugsweise ist das Sicherungselement dazu vorgesehen, den Wischarmadapter in der Funktionsstellung gegen ein Abheben von dem Wischblattadapter in einer Richtung zumindest im Wesentlichen senkrecht zu einer Wischfläche zu sichern. Unter einer "Funktionsstellung" soll in diesem Zusammenhang insbesondere eine Stellung eines montierten Wischblatts verstanden werden, die dazu vorgesehen ist, eine Scheibe, insbesondere eine Fahrzeugscheibe, von Feuchtigkeit, Nässe und/oder Schmutz zu befreien. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Insbesondere wird die Wischfläche von einer Längserstreckung des Wischblatts und einer Bewegungsrichtung des Wischarms aufgespannt. Die Wischfläche kann insbesondere gekrümmt oder eben sein. Vorzugsweise ist die Wischfläche wenigstens zu einem Großteil korrelierend zu wenigstens einem Teil einer äußeren Oberfläche einer Scheibe, insbesondere Glasscheibe und/oder Kunststoffscheibe und/oder Sichtscheibe und/oder Windschutzscheibe eines Fahrzeugs ausgebildet. Besonders bevorzugt passt sich eine Krümmung der Längserstreckung des Wischblatts einer Krümmung der äußeren Oberfläche der Scheibe an. Vorzugsweise korreliert die Wischfläche mit der äußeren Oberfläche der Scheibe. Besonders bevorzugt liegt die Wischfläche wenigstens zu einem Großteil flächig auf zumindest einem Teil der äußeren Oberfläche der Scheibe auf. Insbesondere verhindert das Sicherungselement eine Trennung des Wischarmadapters von dem Wischblattadapter in der Funktionsstellung in der zumindest im Wesentlichen senkrechten Richtung zu der Wischfläche.

Nach der Erfindung wird vorgeschlagen, dass der Wischblattadapter zumindest ein weiteres Wischblattadapterelement aufweist, welches positionsfest mit der Wischleiste verbunden ist und welches zu einer kippbaren Lagerung des zumindest einen Wischblattadapterelements vorgesehen ist, wobei das weitere Wischblattadapterelement zumindest einen Blockierfortsatz aufweist, welcher dazu vorgesehen ist, in zumindest einer Relativstellung des Wischblattadapterelements zu dem weiteren Wischblattadapterelement, eine Bewegung der Verriegelungseinheit aus der Sicherungsposition in die Entsicherungsposition zu blockieren. Hierdurch kann eine vorteilhaft sichere Montierbarkeit zu einer Fehlervermeidung bei einem Montagevorgang erreicht werden. Ferner kann hierdurch vorteilhaft einfach eine ungewollte Demontage verhindert werden. Die kippbare Lagerung ist insbesondere dazu vorgesehen, die Haupterstreckungsrichtung des einen Wischblattadapterelements gegenüber einer Haupterstreckungsrichtung zumindest eines weiteren Wischblattadapterelement zu verkippen. Vorzugsweise ist die kippbare Lagerung als ein Radiallager ausgebildet. Das Radiallager ist vorzugsweise als ein Gleitlager oder als ein Wälzlager ausgebildet. Besonders bevorzugt ist die kippbare Lagerung als radiales Gleitlager ausgebildet. Bevorzugt gibt das Sicherungselement den Kopplungsbereich des zumindest einen Wischblattadapterelements in der Entsicherungsposition wenigstens zu einem Großteil frei. Vorzugsweise ist der Blockierfortsatz einteilig mit dem zumindest einen weiteren Wischblattadapterelement augebildet. Insbesondere ist der Blockierfortsatz dazu vorgesehen, eine Relativbewegung des zumindest einen Wischblattadapterelements gegenüber dem zumindest einen weiteren Wischblattadapterelement in der Längsrichtung des zumindest einen Wischblattadapterelements zu blockieren. Vorzugsweise ist der Blockierfortsatz dazu vorgesehen, eine Relativbewegung des Sicherungselements und des zumindest einen Wischblattadapterelements von der Sicherungsposition des Sicherungselements in die Entsicherungsposition des Sicherungselements zu blockieren. Insbesondere ist die Haupterstreckungsrichtung des zumindest einen Wischblattadapterelements in der zumindest einen Relativstellung zumindest im Wesentlichen parallel zu einer Haupterstreckungsrichtung des zumindest einen weiteren Wischblattadapterelements. Bevorzugt ist der Blockierfortsatz in der Funktionsstellung dazu vorgesehen, eine Bewegung der Sicherungseinheit von der Sicherungsposition in die Entsicherungsposition zu blockieren. Der Blockierfortsatz ist vorzugsweise als eine Erhebung auf einer äußeren Oberfläche des weiteren Wischblattadapterelements angeordnet. Des Weiteren erstreckt sich der Blockierfortsatz in einer Richtung senkrecht zu der äußeren Oberfläche des weiteren Wischblattadapterelements insbesondere um zumindest 1 mm, vorzugsweise um zumindest 2 mm, bevorzugt um zumindest 3mm und besonders bevorzugt um zumindest 5mm.

Außerdem wird ein Scheibenwischer mit einer Scheibenwischervorrichtung, insbesondere die vorhergenannte Scheibenwischervorrichtung, vorgeschlagen. Hierdurch kann ein vorteilhaft betriebssicherer und/oder montagefreundlicher Scheibenwischer bereitgestellt werden. Durch die erfindungsgemäße Ausgestaltung des Scheibenwischers kann eine vorteilhaft sichere und einfache Verbindung des Wischblatts am Wischarm ermöglicht werden. Durch die Scheibenwischervorrichtung kann eine unbeabsichtigte fehlerhafte Montage des Wischblatts am Wischarm vorteilhaft verhindert werden. Es kann ein vorteilhaft hoher Benutzerkomfort bei einer Montage des Wischblatts am Wischarm ermöglicht werden, insbesondere da einem Benutzer genau ein eindeutig identifizierbarer Montagepfad zur Befestigung des Wischblatts angeboten werden kann. Es kann eine vorteilhaft schnelle Montage des Wischblatts erreicht werden. Vorzugsweise umfasst der Scheibenwischer das Wischblatt und den Wischarm. Ferner weist der Scheibenwischer bevorzugt eine Federschine und/oder eine Wischlippe und/oder einen Federschienenaufnahmekanal und/oder einen Windabweiser und/oder zumindest einen Fluidkanal und/oder zumindest einen Zuleitkanal und/oder zumindest eine Wischblattendkappe und/oder eine Wischleisteneinheit mit einem Wischleistenkörper auf. Bevorzugt ist das Wischblatt über den Wischblattadapter und den Wischarmadapter an dem Wischarm befestigbar. Insbesondere ist das Wischblatt über den Wischblattadapter, insbesondere das eine Wischblattadapterelement und/oder das weitere Wischblattadapterelement, relativ zum Wischarm kippbar, insbesondere schwenkbar, gelagert. Vorzugsweise ist das Wischblatt über die Scheibenwischervorrichtung in der Entsicherungsposition des Sicherungselements vom Wischarm trennbar.

Die erfindungsgemäße Scheibenwischervorrichtung und/oder der erfindungsgemäße Scheibenwischer sollen/soll hierbei nicht auf die oben beschriebene Anwendung und Ausführungsform beschränkt sein. Insbesondere können/kann die erfindungsgemäße Scheibenwischervorrichtung und/oder der erfindungsgemäße Scheibenwischer zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Scheibenwischers mit einer erfindungsgemäßen Scheibenwischervorrichtung in einem montierten Zustand,
- Fig. 2: eine schematische Darstellung eines Wischarmadapters und eines Wischblattadapters der erfindungsgemäßen Scheibenwischervorrichtung in einem demontierten Zustand und einer Entsicherungsposition der Verriegelungseinheit,
- Fig. 3: eine schematische Darstellung eines Wischarmadapters und eines Wischblattadapters der erfindungsgemäßen Scheibenwischervorrichtung in einem montierten Zustand und einer Sicherungsposition der Verriegelungseinheit und
- Fig. 4: einen Schnitt in einer Ebene senkrecht zu einer Längsrichtung der Scheibenwischervorrichtung in einem montierten Zustand.

### Beschreibung des Ausführungsbeispiels

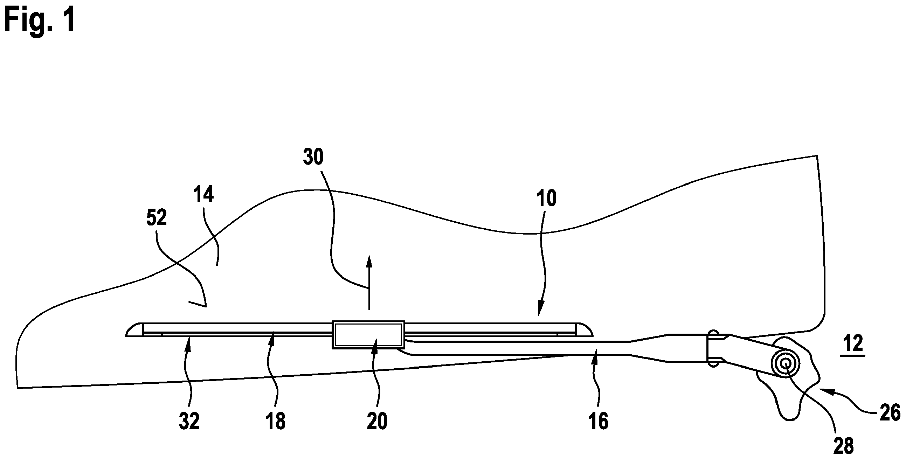

In der Figur 1 ist ein Scheibenwischer 10 eines Fahrzeugs 12 gezeigt, der an einer Frontscheibe 14 des Fahrzeugs 12 angeordnet ist. Der Scheibenwischer 10 umfasst einen Wischarm 16 und ein Wischblatt 18. Der Scheibenwischer 10 weist eine Scheibenwischervorrichtung 20 auf. Das Wischblatt 18 ist über einen Wischblattadapter 22 des Wischblatts 18 und einen Wischarmadapter 24 des Wischarms 16 an dem Wischarm 16 befestigt. Der Scheibenwischer 10 umfasst eine Antriebseinheit 26 mit einer Antriebswelle 28, über die der Wischarm 16 schwenkbar antreibbar ist. Insbesondere wird bei einer Schwenkbewegung des Wischarms 16 das Wischblatt 18 in und entgegen einer zumindest im Wesentlichen senkrecht zu einer Haupterstreckungsrichtung des Wischblatts 18 ausgerichteten Wischrichtung 30 entlang der Frontscheibe 14 bewegt. Es sind jedoch auch andere Ausgestaltungen des Scheibenwischers 10 denkbar.

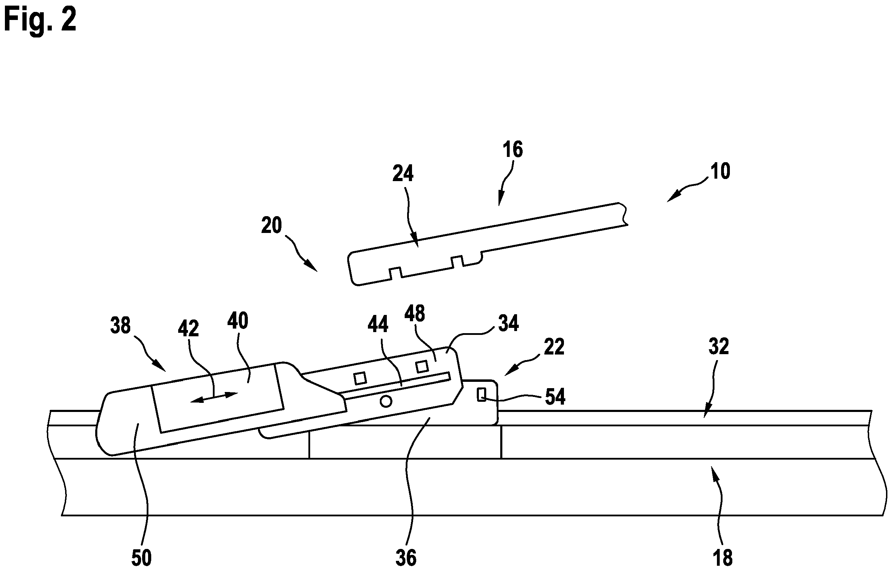

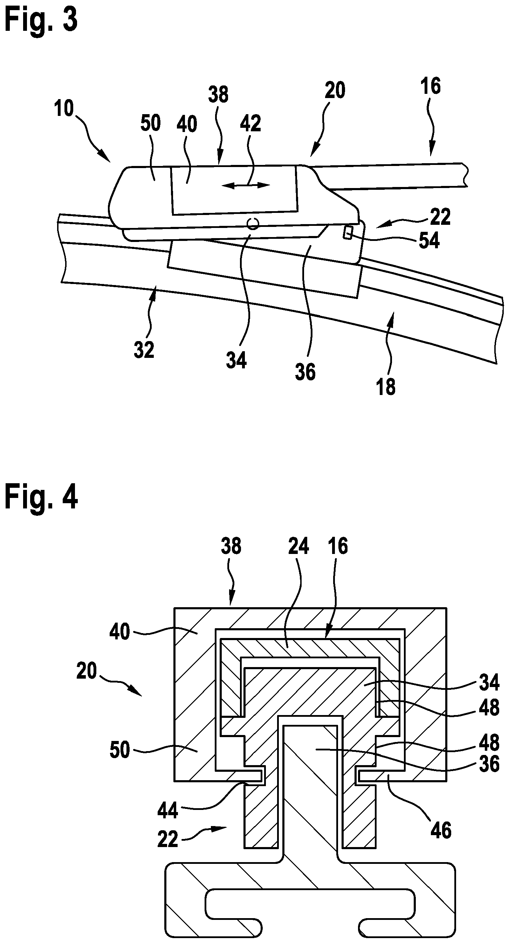

In Figur 2 ist die Scheibenwischervorrichtung 20 in einer entsicherten Montageposition gezeigt. Die Scheibenwischervorrichtung 20 weist den Wischblattadapter 22 zu einer Befestigung einer Wischleiste 32, welcher zwei Wischblattadapterelemente 34, 36 aufweist. Des Weiteren weist die Scheibenwischervorrichtung 20 den Wischarm 16 auf, welcher den Wischarmadapter 24 aufweist. Der Wischarmadapter 24 ist zu einer direkten, lösbaren Kopplung mit dem ersten Wischblattadapterelement 34 vorgesehen. Ferner weist die Scheibenwischervorrichtung 20 eine Verriegelungseinheit 38 auf, die in einer Sicherungsposition dazu vorgesehen ist, den zumindest einen Wischblattadapter 22 in einem montierten Zustand an dem Wischarmadapter 24 zu sichern. Des Weiteren ist die Verriegelungseinheit 38 dazu vorgesehen, zumindest im Wesentlichen parallel zu einer Haupterstreckungsrichtung des Wischarms 16 von der Sicherungsposition in eine Entsicherungsposition und/oder von der Entsicherungsposition in die Sicherungsposition der Verriegelungseinheit 38 bewegt zu werden. Die Figur 3 zeigt die Scheibenwischervorrichtung 20 in der Sicherungsposition der Verriegelungseinheit 38 mit dem montierten Wischarm 16. Ferner weist die Verriegelungseinheit 38 ein nicht näher dargestelltes Rückstellelement auf, das dazu vorgesehen ist, die Verriegelungseinheit 38 in der Sicherungspositsion zu halten. Das Rückstellelement ist als eine Feder ausgebildet, die dazu vorgesehen ist, eine Rückstellkraft in Richtung der Sicherungsposition auf die Verriegelungseinheit 38 auszuüben. Die Verriegelungseinheit 38 weist ein Sicherungselement 40 auf, welches in Längsrichtung 42 zweiseitig beschränkt an dem Wischblattadapter 22, insbesondere dem ersten Wischblattadapterelement 34, geführt ist. In dem vorliegenden Ausführungsbeispiel weist das erste Wischblattadapterelement 34 zwei geschlossene Längsführungsnuten 44 zu einer Führung des Sicherungselements 40 an dem Wischblattadapter 22 auf. Die zwei geschlossenen Längsführungsnuten 44 weisen, betrachtet in einer Ebene senkrecht zu der Haupterstreckungsrichtung der Längsführungsnut 44, eine unvollständig geschlossene Umfangsfläche zu einer Aufnahme und/oder Führung eines Führungsfortsatzes 46 auf. Die Längsführungsnuten 44 sind an zwei zueinander zumindest im Wesentlichen parallel verlaufenden Seitenflächenbereichen des ersten Wischblattadapterelements 34 angeordnet.

In Figur 4 ist eine schematische Schnittdarstellung der Scheibenwischervorrichtung 20 mit einem Schnitt durch die Längsführungsnuten 44 gezeigt. Die Längsführungsnuten 44 sind jeweils einteilig mit jeweils einer der Seitenflächenbereichen des ersten Wischblattadapterelements 34 ausgebildet. Des Weiteren begrenzen die Längsführungsnuten 44 jeweils eine Ausnehmung in den Seitenflächenbereichen des ersten Wischblattadapterelements 34. Ferner weist die von einer der Längsführungsnuten 44 begrenzte Ausnehmung einen rechteckförmigen Querschnitt in einer Ebene senkrecht zu einer Haupterstreckungsrichtung der Längsführungsnut 44 auf. Die rechteckförmige Ausnehmung ist dreiseitig von der Längsführungsnut 44 umschlossen. In einer Richtung parallel zu der Haupterstreckungsrichtung der jeweiligen Längsführungsnut 44 ist die jeweilige Längsführungsnut 44 an Stirnseiten geschlossen ausgebildet. Die von der Längsführungsnut 44 begrenzte Ausnehmung in dem ersten Wischblattadapterelement 34 ist an den beiden Stirnseiten von der Längsführungsnut 44 beschränkt. Die Stirnseiten sind mittels einer formschlüssigen Beschränkung geschlossen ausgebildet. Die formschlüssige Beschränkung ist als ein Anschlag ausgebildet, der dazu vorgesehen ist, eine Bewegung des Sicherungselements 40 mit den Führungsfortsätzen 46 über eine maximale Erstreckung der Längsführungsnut 44 hinaus zu verhindern.

Des Weiteren weist das Sicherungselement 40 zwei Führungsfortsätze 46 auf. Die Führungsfortsätze 46 sind an einer inneren Umfangsfläche des Sicherungselements 40 angeordnet. Des Weiteren sind die Führungsfortsätze 46 an sich gegenüberligenden Seitenwandbereichen der inneren Umfangsfläche des Sicherungselements 40 angeordnet. Jeweils einer der Seitenwandbereiche ist einteilig mit einer der Führungsfortsätze 46 ausgebildet. Die Führungsfortsätze 46 sind jeweils zu einem Eingriff in eine der beiden Längsführungsnuten 44 vorgesehen. Eine äußere Umfangsfläche der Führungsfortsätze 46 ist korrelierend zu einer inneren Umfangsfläche der Längsführungsnuten 44 ausgebildet. Die innere Umfangsfläche der Längsführungsnuten 44 ist dazu vorgesehen, die äußere Umfangsfläche der Führungsfortsätze 46 beweglich aufzunehmen. Des Weiteren ist die äußere Umfangsfläche der Führungsfortsätze 46 dazu vorgesehen, in die innere Umfangsfläche der Längsführungsnuten 44 einzugreifen. Ein Querschnitt der Führungsfortsätze 46 in einer Ebene senkrecht zu einer Haupterstreckungsrichtung der Führungsfortsätze 46 betrachtet, weist an der äußeren Umfangsfläche zumindest teilweise eine rechteckige Form auf. Die rechteckige Form des Führungsfortsatzes 46 ist relativ zu der rechteckigen Form des Querschnitts der Längsführungsnut 44 verkleinert ausgebildet.

Ebenfalls denkbar ist, dass das Sicherungselement 40 die zwei Längsführungsnuten 44 aufweist und das Wischblattadapterelement 34 die zwei Führungsfortsätze 46 aufweist.

Ferner ist das Sicherungselement 40 unverlierbar mit dem ersten Wischblattadapterelement 34 verbunden. Die Führungsfortstäze 46 sind in einem montierten Zustand in der jeweiligen geschlossenen Längsführungsnut 44 angeordnet. Eine maximale Relativbewegung des Sicherungselements 40 zu dem ersten Wischblattadapterelement 34 ist durch die formschlüssige Beschränkung der Längsführungsnut 44 begrenzt. Die Längsführungsnut 44 und die Führungsfortsätze 46 sind in dem montierten Zustand dazu vorgesehen, die maximale Relativbewegung des Sicherungselements 40 zu dem ersten Wischblattadapterelement 34 in alle Raumrichtungen formschlüssig zu begrenzen.

Außerdem weist das erste Wischblattadapterelement 34 einen Kopplungsbereich 48 auf, welcher in einem weiteren montierten Zustand zumindest im Wesentlichen von dem Wischarmadapter 24 umgriffen ist. In dem weiteren montierten Zustand ist der Wischarmadapter 24 mit dem ersten Wischblattadapterelement 34 direkt lösbar gekoppelt. Die Figur 4 zeigt, dass der Kopplungsbereich 48 auf jeder der Seitenwandbereiche des einen Wischblattadapterelements 34 zwei Koppelelemente aufweist. Die Koppelelemente des einen Wischblattadapterelements 34 sind als Fortsätze ausgebildet. Die Fortsätze weisen einen rechteckförimgen Querschnitt auf. Der Wischarmadapter 24 weist korrelierend zu den Fortsätzen ausgebildete Ausnehmungen als Koppelelemente auf. In einem montierten Zustand des Wischarms 16 mit dem Wischblattadapter 22 umfassen die als Aussparungen ausgebildeten Koppelelemente des Wischarmadapters 24 die als Fortsätze ausgebildeten Koppelemente des Wischblattadapters 22 teilweise an einer äußeren Umfangsfläche. Die Koppelelemente sind in dem montierten Zustand dazu vorgesehen, eine Relativbewegung des Wischblattadapters 22 und des Wischarmadapters 24 in einer Haupterstreckungsrichtung des Wischarms 16 formschlüssig zu verhindern und/oder zu beschränken. Das Sicherungselement 40 ist in dem weiteren montierten Zustand in der Entsicherungsposition. Der Kopplungsbereich 48 ist in der Entsicherungsposition der Verriegelungseinheit 38 in einer Richtung senkrecht zu der Längsrichtung 42 des Wischblattadapters 22 frei von einer Überdeckung durch das Sicherungselement 40. Des Weiteren weist das Sicherungselement 40 in der Entsicherungsposition des weiteren montierten Zustands einen größten möglichen, insbesondere einen durch die zweiseiteige Beschränkung beschränkten, relativen Abstand zu dem ersten Wischblattadapterelement 34 auf.

Des Weiteren weist das Sicherungselement 40 einen manuell betätigbaren Schieber 50 auf. Der manuell betätigbare Schieber 50 weist einen Griffbereich auf. Der Griffbereich ist als ein Vertiefungsbereich in einer äußeren Umfangsfläche des Schiebers 50 ausgebildet. Der Schieber 50 ist dazu vorgesehen, das Sicherungselement 40 manuell zu betätigen.

Ferner ist das Sicherungselement 40 dazu vorgesehen ist, den Wischarmadapter 24 und den Wischblattadapter 22 in einer Richtung zumindest im Wesentlichen senkrecht zu einer Wischfläche 52 in einer Funktionsstellung zu verriegeln. Das Sicherungselement 40 ist in der Funktionsstellung in der Sicherungsposition. In der Sicherungsposistion umgreift das Sicherungselement 40 den Wischarmadapter 24 an drei äußeren Seitenflächen des Wischarmadapters 24. Ferner ist die Wischfläche 52 korrelierend zu einem Teilbereich einer äußeren Oberfläche der Frontscheibe 14 ausgebildet. Eine maximal mögliche Bewegung des Wischblatts 18 in der Funktionsstellung auf der Frontscheibe 14 definiert die Wischfläche 52.

Außerdem weist der Wischblattadapter 22 ein weiteres Wischblattadapterelement 36 auf, welches positionsfest mit der Wischleiste 32 verbunden ist. Das weitere Wischblattadapterelement 36 ist insbesondere fest mit zumindest einer Federschiene der Wischleiste 32 verbunden, insbesondere verschweißt. Des Weiteren ist das weitere Wischblattadapterelement 36 zu einer kippbaren Lagerung des ersten Wischblattadapterelements 34 vorgesehen. Das erste Wischblattadapterelement 34 und das weitere Wischblattadapterelement 36 sind um eine gemeinsame Achse relativ zueinander kippbar gelagert. Die kippbare Lagerung kann als ein radiales Gleitlager ausgebildet sein. Die kippbare Lagerung ist dazu vorgesehen, die Haupterstreckungsrichtung des ersten Wischblattadapterelements 34 und eine Haupterstreckungsrichtung des weiteren Wischblattadapterelements 36 relativ zueinander zu verkippen. Des Weiteren weist das weitere Wischblattadapterelement 36 zumindest einen Blockierfortsatz 54 auf, welcher dazu vorgesehen ist, in einer Relativstellung des einen Wischblattadapterelements 34 zu dem weiteren Wischblattadapterelement 36, eine Bewegung der Verriegelungseinheit 38 aus der Sicherungsposition in die Entsicherungsposition zu blockieren. In der einen Relativstellung ist die Haupterstreckungsrichtung des zumindest einen Wischblattadapterelements 34 zumindest im Wesentlichen parallel zu der Haupterstreckungsrichtung des weiteren Wischblattadapterelements 36. Der Blockierfortsatz 54 ist einteilig mit dem einen Wischblattadapterelement 34 ausgebildet. Des Weiteren ist der Blockierfortsatz 54 als ein Fortsatz auf einer der Seitenwandbereiche des einen Wischblattadapterelements 34 ausgebildet. Der Blockierfortsatz 54 ist in der einen Relativstellung dazu vorgesehen, eine, insbesondere ungewollte Bewegung des Sicherungselements 40 von der Sicherungsposition in die Entsicherungsposition zu verhindern.

## Patentansprüche

1. Scheibenwischervorrichtung mit zumindest einem Wischblattadapter (22) zu einer Befestigung einer Wischleiste (32), welcher zumindest ein Wischblattadapterelement (34, 36) aufweist, mit einem Wischarm (16), welcher zumindest einen
Wischarmadapter (24) aufweist, der zu einer direkten, lösbaren Kopplung mit dem Wischblattadapterelement (34) vorgesehen ist, und mit einer Verriegelungseinheit (38), die in einer Sicherungsposition dazu vorgesehen ist, den zumindest einen Wischblattadapter (22) in einem montierten Zustand an dem zumindest einen Wischarmadapter (24) zu sichern, und die dazu vorgesehen ist, zumindest im Wesentlichen parallel zu einer Haupterstreckungsrichtung des Wischarms (16) von der Sicherungsposition in eine Entsicherungsposition und/oder von der
Entsicherungsposition in die Sicherungsposition der Verriegelungseinheit (38) bewegt zu werden,
wobei
die Verriegelungseinheit (38) zumindest ein Sicherungselement (40) aufweist, welches in Längsrichtung (42) zweiseitig beschränkt an dem Wischblattadapter (22),
insbesondere dem Wischblattadapterelement (34), geführt ist,
wobei
das Sicherungselement (40) und/oder das Wischblattadapterelement (34) zumindest eine geschlossene Längsführungsnut (44) zu einer Führung des Sicherungselements (40) an dem Wischblattadapter (22) aufweist, wobei der Wischblattadapter (22) zumindest ein weiteres Wischblattadapterelement (36) aufweist, welches positionsfest mit der Wischleiste (32) verbunden ist und welches zu einer kippbaren Lagerung des zumindest einen Wischblattadapterelements (34) vorgesehen ist, **dadurch gekennzeichnet, dass** das weitere Wischblattadapterelement (36) zumindest einen Blockierfortsatz (54) aufweist, welcher dazu vorgesehen ist, in zumindest einer Relativstellung des zumindest einen Wischblattadapterelements (34) zu dem zumindest einen weiteren Wischblattadapterelement (36), eine Bewegung der Verriegelungseinheit aus der Sicherungsposition in die Entsicherungsposition zu blockieren.

2. Scheibenwischervorrichtung nach Anspruch 1, **dadurch gekennzeichnet, dass** das Sicherungselement (40) und/oder das Wischblattadapterelement (34) zumindest einen Führungsfortsatz (46) aufweist, welcher zu einem Eingriff in die zumindest eine Längsführungsnut (44) vorgesehen ist.

3. Scheibenwischervorrichtung nach einem der vorhergehenden Ansprüche, **dadurch gekennzeichnet, dass** das Sicherungselement (40) unverlierbar mit dem Wischblattadapterelement (34) verbunden ist.

4. Scheibenwischervorrichtung nach einem der vorhergehenden Ansprüche, **dadurch gekennzeichnet, dass** das zumindest eine Wischblattadapterelement (34) einen Kopplungsbereich (48) aufweist, welcher in einem montierten Zustand zumindest im Wesentlichen von dem Wischarmadapter (24) umgriffen ist, wobei der Kopplungsbereich (48) in der Entsicherungsposition der Verriegelungseinheit (38), insbesondere in einer Richtung senkrecht zu der Längsrichtung (42) des Wischblattadapters (34), zumindest im Wesentlichen frei von einer Überdeckung durch das Sicherungselement (40) ist.

5. Scheibenwischervorrichtung nach einem der vorhergehenden Ansprüche, **dadurch gekennzeichnet, dass** das Sicherungselement (40) einen manuell betätigbaren Schieber (50) aufweist.

6. Scheibenwischervorrichtung nach einem der vorhergehenden Ansprüche, **dadurch gekennzeichnet, dass** das Sicherungselement (40) dazu vorgesehen ist, den Wischarmadapter (24) und den Wischblattadapter (22) in einer Richtung zumindest im Wesentlichen senkrecht zu einer Wischfläche (52) in einer Funktionsstellung zu verriegeln.

7. Scheibenwischer mit einer Scheibenwischervorrichtung nach einem der vorhergehenden Ansprüche.

## Claims

1. Windscreen wiper device having at least one wiper blade adapter (22) for fastening of a wiper strip (32), the wiper blade adapter having at least one wiper blade adapter element (34, 36), having a wiper arm (16) which has at least one wiper arm adapter (24) which is provided for direct, releasable coupling to the wiper blade adapter element (34), and having a locking unit (38) which, in a securing position, is provided to secure the at least one wiper blade adapter (22) in a mounted state on the at least one wiper arm adapter (24) and which is provided to be moved at least substantially parallel to a main direction of extent of the wiper arm (16) from the securing position into a releasing position and/or from the releasing position into the securing position of the locking unit (38),
wherein
the locking unit (38) has at least one securing element (40) which is guided on the wiper blade adapter (22), in particular on the wiper blade adapter element (34), in a manner delimited on two sides in the longitudinal direction (42),
wherein the securing element (40) and/or the wiper blade adapter element (34) have/has at least one closed longitudinal guide groove (44) for guiding the securing element (40) on the wiper blade adapter (22), wherein the wiper blade adapter (22) has at least one further wiper blade adapter element (36) which is connected in a positionally fixed manner to the wiper strip (32) and which is provided for tiltable mounting of the at least one wiper blade adapter element (34), **characterized in that** the further wiper blade adapter element (36) has at least one blocking extension (54) which is provided, in at least one relative position of the at least one wiper blade adapter element (34) with respect to the at least one further wiper blade adapter element (36), to block a movement of the locking unit from the securing position into the releasing position.

2. Windscreen wiper device according to Claim 1, **characterized in that** the securing element (40) and/or the wiper blade adapter element (34) have/has at least one guide extension (46) which is provided for engaging in the at least one longitudinal guide groove (44).

3. Windscreen wiper device according to either of the preceding claims, **characterized in that** the securing element (40) is captively connected to the wiper blade adapter element (34).

4. Windscreen wiper device according to one of the preceding claims, **characterized in that** the at least one wiper blade adapter element (34) has a coupling region (48) which, in a mounted state, is at least substantially engaged around by the wiper arm adapter (24), wherein, in the releasing position of the locking unit (38), in particular in a direction perpendicular to the longitudinal direction (42) of the wiper blade adapter (34), the coupling region (48) is at least substantially free from overlapping by the securing element (40).

5. Windscreen wiper device according to one of the preceding claims, **characterized in that** the securing element (40) has a manually actuable slider (50).

6. Windscreen wiper device according to one of the preceding claims, **characterized in that** the securing element (40) is provided to lock the wiper arm adapter (24) and the wiper blade adapter (22) in a functional position in a direction at least substantially perpendicular to a wiping surface (52).

7. Windscreen wiper having a windscreen wiper device according to one of the preceding claims.

## Revendications

1. Dispositif d'essuie-glace avec au moins un adaptateur de balai d'essuie-glace (22) pour une fixation d'une lame d'essuie-glace (32), qui présente au moins un élément d'adaptateur de balai d'essuie-glace (34, 36), avec un bras d'essuie-glace (16) qui présente au moins un adaptateur de bras d'essuie-glace (24) qui est prévu pour un couplage amovible direct à l'élément d'adaptateur de balai d'essuie-glace (34), et avec une unité de verrouillage (38) qui est prévue dans une position de sécurisation pour sécuriser l'au moins un adaptateur de balai d'essuie-glace (22) dans un état monté sur l'au moins un adaptateur de bras d'essuie-glace (24), et qui est prévue pour être déplacée au moins essentiellement parallèlement à une direction d'extension principale du bras d'essuie-glace (16) de la position de sécurisation à une position de désécurisation et/ou de la position de désécurisation à la position de sécurisation de l'unité de verrouillage (38),
l'unité de verrouillage (38) présentant au moins un élément de sécurisation (40) qui est guidé de manière limitée des deux côtés dans la direction longitudinale (42) sur l'adaptateur de balai d'essuie-glace (22), notamment sur l'élément d'adaptateur de balai d'essuie-glace (34),
l'élément de sécurisation (40) et/ou l'élément d'adaptateur de balai d'essuie-glace (34) présentant au moins une rainure de guidage longitudinale fermée (44) pour un guidage de l'élément de sécurisation (40) sur l'adaptateur de balai d'essuie-glace (22), l'adaptateur de balai d'essuie-glace (22) présentant au moins un autre élément d'adaptateur de balai d'essuie-glace (36) qui est relié en position fixe à la lame d'essuie-glace (32) et qui est prévu pour un logement basculant de l'au moins un élément d'adaptateur de balai d'essuie-glace (34), **caractérisé en ce que** l'autre élément d'adaptateur de balai d'essuie-glace (36) présente au moins un prolongement de blocage (54) qui est prévu pour bloquer, dans au moins une position relative de l'au moins un élément d'adaptateur de balai d'essuie-glace (34) par rapport à l'au moins un autre élément d'adaptateur de balai d'essuie-glace (36), un mouvement de l'unité de verrouillage de la position de sécurisation à la position de désécurisation.

2. Dispositif d'essuie-glace selon la revendication 1, **caractérisé en ce que** l'élément de sécurisation (40) et/ou l'élément d'adaptateur de balai d'essuie-glace (34) présente au moins un prolongement de guidage (46) qui est prévu pour s'engager dans l'au moins une rainure de guidage longitudinale (44).

3. Dispositif d'essuie-glace selon l'une quelconque des revendications précédentes, **caractérisé en ce que** l'élément de sécurisation (40) est relié de manière imperdable à l'élément d'adaptateur de balai d'essuie-glace (34).

4. Dispositif d'essuie-glace selon l'une quelconque des revendications précédentes, **caractérisé en ce que** l'au moins un élément d'adaptateur de balai d'essuie-glace (34) présente une zone de couplage (48) qui, dans un état monté, est au moins essentiellement entourée par l'adaptateur de bras d'essuie-glace (24), la zone de couplage (48) étant au moins essentiellement exempte d'un recouvrement par l'élément de sécurisation (40) dans la position de désécurisation de l'unité de verrouillage (38), notamment dans une direction perpendiculaire à la direction longitudinale (42) de l'adaptateur de balai d'essuie-glace (34).

5. Dispositif d'essuie-glace selon l'une quelconque des revendications précédentes, **caractérisé en ce que** l'élément de sécurisation (40) présente un coulisseau (50) pouvant être actionné manuellement.

6. Dispositif d'essuie-glace selon l'une quelconque des revendications précédentes, **caractérisé en ce que** l'élément de sécurisation (40) est prévu pour verrouiller l'adaptateur de bras d'essuie-glace (24) et l'adaptateur de balai d'essuie-glace (22) dans une position fonctionnelle dans une direction au moins essentiellement perpendiculaire à une surface d'essuyage (52).

7. Essuie-glace avec un dispositif d'essuie-glace selon l'une quelconque des revendications précédentes.
